# EUROPEAN PATENT SPECIFICATION

(11) **EP 3 053 679 B1**
(45) Date of publication and mention of the grant of the patent: **18.12.2019**
(21) Application number: 16153588.5
(22) Date of filing: 01.02.2016
(51) Int. Cl.: B22F 7/06, B05D 7/00, B29C 65/00, C23F 13/00, B29C 65/56, B64D 37/32, B29L 31/30, B29C 70/88, B64D 45/02, F16B 1/00

(54) **INTERMETALLIC AND COMPOSITE METALLIC GAP FILLER**
INTERMETALLISCHES UND VERBUNDMETALLISCHES LÜCKENFÜLLMATERIAL
COMPOSITE INTERMÉTALLIQUE ET MÉTALLIQUE POUR REMPLISSAGE D'ESPACE VIDE

(30) Priority: 05.02.2015 US 201514614656
(43) Date of publication of application: 10.08.2016
(73) Proprietor: The Boeing Company, Chicago, IL 60606-1596 (US)
(72) Inventor: GROSS, Adam Franklin, Chicago, IL 60606-2016 (US)
(74) Representative: Boult Wade Tennant LLP

(56) References cited:
- FR-A1- 2 765 066
- US-A- 4 755 904
- US-A1- 2013 099 490

## Description

### FIELD

This invention relates to a gap filler positioned between structural components of a structure, and more particularly, the gap filler which provides electrical conductivity between the structural components of an aircraft.

### BACKGROUND

Structures and particularly aircraft are designed to withstand lightning strikes and maintain their structural integrity. Traditional construction of aircraft, for example, included metallic structural elements being secured together with metallic fasteners. The fasteners were electrically grounded to the metallic structural elements with the metallic fasteners being in contact with the metallic structural elements. This arrangement provided electrical conductivity between the fastener and the structural element thereby not electrically isolating the fastener from the structural elements. Isolating the fastener would otherwise provide an undesired electrostatic force between the fastener and the structural element upon the occurrence of a lightning strike to the aircraft.

Aircraft are more recently being constructed of structural components made of a composite material. The composite material comprises a matrix material, often a resin, and of a fiber material such as carbon fiber. The resin is generally not as electrically conductive in contrast to the fiber material. This composite material is often carbon fiber reinforced plastic ("CFRP"). The CFRP structural elements are secured together with fasteners, such as, metallic bolts. A bolt used to fasten a structural element constructed of CFRP may not necessarily be electrically grounded to the CFRP structural element. Rough surfaces of the bolt and rough surfaces of the structural element can create gaps between the surface of the metallic bolt and that of the electrically conductive fiber. This condition can lead to an electrostatic force build up between the fastener and the structural element constructed of CFRP.

Currently, in an attempt to prevent an electrostatic force build-up between the fastener and the structural element, the fasteners or bolts are coated with an electrically insulating sealant material before they are secured to the structural element constructed of CFRP material. Thus, at the time of a lightning strike to the aircraft, the insulating of the fastener from the structural element prevents an undesired electrostatic build-up between the fastener and the structural element.

However, coating the fasteners with the sealant and then securing them to the structural element takes a great deal of care, time and expense compared to the traditional securement of metallic structural elements with metallic fasteners. The sealant must completely cover the surface of the fastener, otherwise, at the time of a lightning strike to the aircraft, current could travel from the fibers of the structural element to the fastener through an opening or breach of the sealant. Current that passes through such opening will charge the fastener and create an imbalance of the charge between the fastener and the fiber of the CFRP. This condition can create undesired electrostatic forces between the bolt and the fibers of the CFRP. Additional, care needs to be taken in securing the fastener such that sealant is not removed in the process. Furthermore, once the fastener is installed, careful inspection needs to be made that no opening through the sealant was created during the securement process of the fastener. Thus, careful steps must be taken in coating the fastener, securing the fastener and inspecting the fastener in the fastening process. These steps contribute to cost of the assembly the aircraft.

Other attempts to prevent undesired electrostatic force build-up between the CFRP material of the structural element and the metallic fastener or bolt have been attempted. These attempts were not feasible. For example, the use of a metallic solder could not be employed. Even though solder would provide electrical conductivity and structural integrity between the bolt and the CFRP material, the integrity of the CFRP material is structurally compromised at a temperature of over two hundred and fifty four degrees Fahrenheit (254° F), which is below the melting temperature of many solders. Alternatively, a conductive adhesive could be employed between the bolt and the CFRP material. However, the adhesive has a more resistive conductivity than a metallic bond. This resistivity could result in a charge build up between the two surfaces of the bolt and the CFRP material and result in an undesired electrostatic discharge.

A soft metallic insert could also be employed and positioned between the two surfaces of the bolt and the CFRP material. However, this may improve electrical conductivity between the two surfaces but creates a structural weak point between the two surfaces and is limited in its ability to conform to the two surfaces. Alternatively, welding the bolt to the CFRP structural component is not feasible, where one surface, that of the CFRP structural component, is non-metallic.

There is a need for an inexpensive and reliable gap filler that will conform to the rough surfaces of the fastener or bolt and the structural element constructed of CFRP. The gap filler will need to provide electrical conductivity between the fastener or bolt and fibers of the CFRP material to ground the fastener to the structural element constructed of CFRP material.

US 4755904 discloses a lightning protection system for conductive composite material structure.

FR2765066 discloses a spark resistant structure for aircraft.

US 2013/0099490 discloses a conductance on hydraulic fittings using a soft metal interlayer.

### SUMMARY

The invention provides a structural assembly of an aircraft as defined in claim 1 and a method of manufacture thereof as defined in claim 10.

An example of a structural assembly of an aircraft includes a structural element constructed of a composite material which includes a matrix material and a plurality of fibers positioned to extend through the matrix material in which at least a portion of the plurality of fibers are accessible from a surface of the structural element. A fastener secures the structural element to a structural component. A metal structure comprising gallium is positioned in contact with a surface of the fastener. The metal structure extends from the surface of the fastener and contacts at least a portion of the at least a portion of the plurality of fibers. The metal structure comprises a gallium alloy. The metal structure is obtainable by mixing a liquid metal alloy comprising gallium with at least one of a solid metal and solid metal alloy forming a slurry and applying the slurry onto a surface of a fastener and onto at least a portion of the at least a portion of the plurality of fibers.

An example of a method for assembling a structure which includes the step of providing a structural element constructed of a composite material which includes a matrix material and plurality of fibers positioned to extend through the matrix material wherein at least a portion of the plurality of fibers are accessible from a surface of the structural element. Another step includes mixing a liquid metal alloy comprising gallium with at least one of a solid metal or solid metal alloy forming a slurry. The method further includes the step of applying the slurry onto a surface of a fastener and onto at least a portion of the at least of the portion of the plurality of fibers. Another step of the method includes securing the structural element with the fastener to a structural component wherein the slurry is positioned in contact with the surface of the fastener and interconnects the surface of the fastener with the at least a portion of the at least a portion of the plurality of fibers. The structural element and the structural component are parts of an aircraft.

The features, functions, and advantages that have been discussed can be achieved independently in various embodiments or may be combined in yet other embodiments further details of which can be seen with reference to the following description and drawings.

### BRIEF SUMMARY OF THE DRAWINGS

FIG.1 is a side elevation view of an aircraft;
FIG. 2 is an exemplary schematic fragmentary view of a selected portion of the aircraft in FIG. 1, wherein a cross section is shown of a fastener connecting structural elements constructed of a composite material to a structural component with a metallic gap filler positioned in contact with and interconnecting a surface of the fastener with fibers of the composite material of the structural elements;
FIG. 3 is Table 1 showing sample compositions of gap fillers comprising gallium based alloys of liquid metal combined with a pure solid metal or with a solid metal alloy;
FIG. 4 is a graph showing free corrosion rates for selective samples of metallic gap fillers from Table 1 of FIG. 3;
FIG. 5 is a graph showing galvanic corrosion rates for selective samples of metallic gap fillers from Table 1 of FIG. 3; and
FIG. 6 is a Table 2 showing free and galvanic corrosion rates, along with relative galvanic to free corrosion rates for selective samples of metallic gap fillers from Table 1 along with copper foil and aluminum 6061 alloy.

While various embodiments have been described above, this disclosure is not intended to be limited thereto. Variations can be made to the disclosed embodiments that are still within the scope of the appended claims.

### DETAILED DESCRIPTION

As earlier discussed, it is important to assemble structures that resist damage when struck by lightning. An example of such assembled structures include aircraft. It is desired that electrostatic force build up is not created between metal fasteners and structural elements of the assembled aircraft at the time of a lightning strike. With aircraft being now selectively assembled with composite materials the grounding of a metal fastener with conductive fibers of the composite material of a structural element is needed.

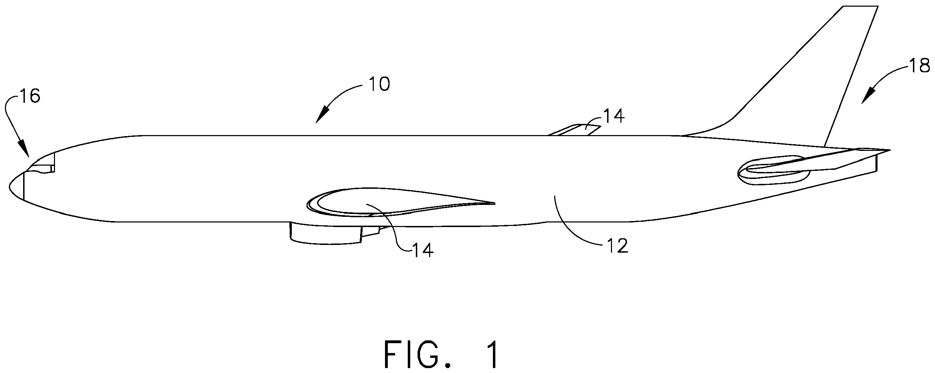

Referring to FIG. 1, an example of an assembled structure, aircraft 10 is shown. Aircraft 10 includes various sections to its assembly. These sections, in this example, include a fuselage 12 and wings 14 extending from opposing sides of fuselage 12. Fuselage 12 also includes a nose section 16 and an opposing tail section 18. Each of these sections of aircraft 10 can be selectively constructed with structural elements constructed of composite materials.

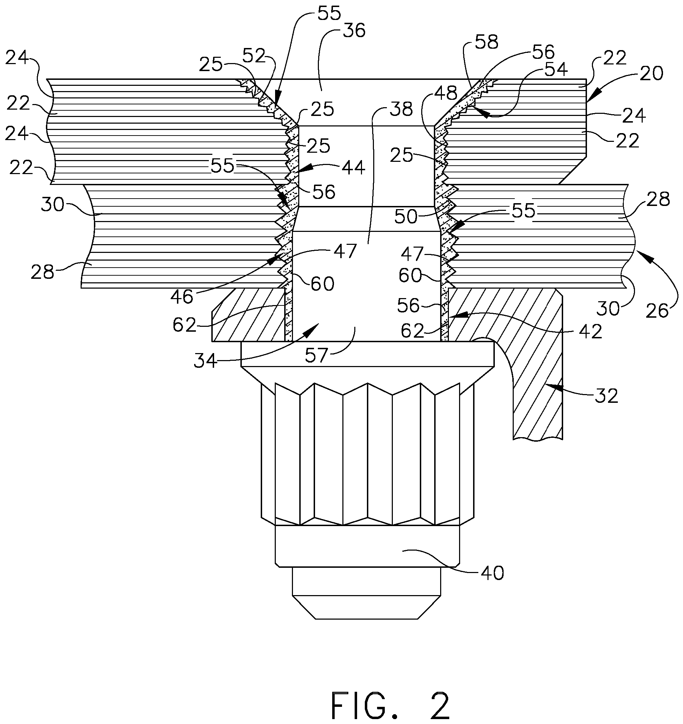

In referring to FIG. 2, an exemplary securement of structural element 20 is shown for an assembly of a selective section of aircraft 10. Structural element 20 is constructed of a composite material, which includes a matrix material 22 and a plurality of fibers 24 positioned to extend through the matrix material 22.

In this example shown in FIG. 2, structural element 20 overlies another structural element 26, which is also constructed of the composite material including a matrix material 28 and a plurality of fibers 30 which are also positioned to extend through matrix material 28. Both structural element 20 and other structural element 26 are secured, to structural component 32. Structural component 32 is another structural item of an assembly of a section of aircraft 10. Structural component 32 can be constructed of a composite material, metal or the like. In this example, structural component 32 is a portion of a metallic frame positioned within a select section of aircraft 10.

Plurality of fibers 24 and 30 in this example are constructed of electrically conductive material such as carbon. Matrix material 22 and 28 in this example is constructed of one of a thermoplastic resin such as polypropylene, polyethylene and nylon or thermosetting resin such as an epoxy.

Structural element 20 and another structural element 26 are secured to structural component 32 with fastener 34. Fastener 34 is a securement item, which can secure two or more items together, such as a bolt, screw, pin or the like. In this example, fastener 34 is a bolt, which includes head 36, threaded shaft 38 (threads not shown) and threaded nut 40 (threads not shown). Fastener or bolt 34 is constructed of metal, such as carbon steel, titanium alloy or the like.

In this example, through-hole 42 is positioned through structural component 32. Through-hole, in this example, was pre-formed in structural component 32. Through-hole 42 may also be positioned through structural component 32 by drilling through structural component 32. Through-hole 44 and recess section 54 of structural element 20 and through-hole 46 of other structural element 26 have been formed with drilling through structural element 20 and other structural element 26, in this example. In drilling through composite material of structural element 20 and another structural element 26, rough surface 48 of structural element 20 and rough surface 50 of other structural element 26 are formed. Additionally, rough surface 52 is formed in recess section 54 of structural element 20.

Plurality of fibers 24, which extend through matrix material 22 of structural element 20 are schematically represented, in FIG. 2. In this example, plurality of fibers 24 extend through matrix material 22 and are positioned throughout structural element 20, extending in the length direction, width direction and layered in the thickness direction of structural element 20. Plurality of fibers 24 in FIG. 2 are schematically shown extending in a length direction and layered in the thickness direction of structural element 20 without showing plurality of fibers 24 extending in a width direction within matrix 22.

With the formation of a discrete through-hole 44 and recess section 54 through structural element 20, through-hole 44 and recess section 54 engages at least a portion 25 of the total of the plurality of fibers 24, which are positioned throughout structural element 20. In FIG. 2 the at least a portion 25 of the plurality of fibers 24 of structural element 20 are schematically shown positioned at and along rough surface 48 of through-hole 44 and at and along rough surface 52 of recess section 54. Portion 25 of plurality of fibers 24, are also positioned about through-hole 44 and recess section 54, but are not shown. The at least a portion 25 of plurality of fibers 24, in FIG. 2, are shown schematically extending to rough surface 48 at through-hole 44 and to rough surface 52 at recess section 54. However, with through-hole 44 and recess section 54 formed, in this example, by drilling through structural element 20, ends of the at least a portion 25 of the plurality of fibers 24 positioned at through-hole 44 and recess section 54 may extend from, be flush with or be recessed from rough surface 48 and rough surface 52. Regardless of the position of an end of a fiber of the at least a portion 25 of plurality of fibers 24 relative to rough surfaces 48 and 52, the ends will be accessible from rough surface 48 in through-hole 44 and from rough surface 52 of recess section 54.

Other structural element 26 with plurality of fibers 30 are similarly configured and schematically presented as described above for structural element 20 with plurality of fibers 24. Plurality of fibers 30 are schematically shown to extend through matrix material 28 and are positioned throughout another structural element 26, extending in the length direction, width direction and layered in the thickness direction of another structural element 26 as the plurality of fibers 24 were configured within structural element 20 and schematically shown. Plurality of fibers 30, in this example, are shown extending in a length direction and layered in the thickness direction of another structural element 26 without showing plurality of fibers 24 extending in a width direction within matrix 28.

With the formation of a discrete through-hole 46 through structural element 26, through-hole 46 engages at least a portion 47 of the total of the plurality of fibers 30, which are positioned throughout another structural element 26. The at least a portion 47 of the plurality of fibers 30 of structural element 26 are schematically shown positioned at and along rough surface 50 of through-hole 46. The at least a portion 47 of plurality of fibers 30, are also positioned about through-hole 46 but are not shown. The at least a portion 47 of plurality of fibers 30 are shown schematically extending to rough surface 50 at through-hole 46. However, with through-hole 46 formed, in this example, by drilling through structural element 26, ends of the at least a portion 47 of the plurality of fibers 30 positioned at through-hole 46 may extend from, be flush with or be recessed from rough surface 50. Regardless of the position of an end of a fiber of the at least a portion 47 of plurality of fibers 30 relative to rough surface 50, the ends will be accessible from rough surface 50 in through-hole 46.

In forming recessed portion 54 and through-hole 44 of structural element 20 and forming through-hole 46 of other structural element 26, these openings are dimensioned to be slightly larger than fastener 34 to enable fastener 34 to extend through structural element 20 and another structural element 26. For the same reason, through-hole 42 of structural component 32 is similarly slightly larger than the dimension of fastener 34. A gap 55 is formed between head 36 and threaded shaft 38, on the one hand, and rough surfaces 48, 50 and 52 of structural element 20, recess portion 54 of structural element 20 and another structural element 26, on the other hand. Gap 55 is also formed between structural component 32 and fastener or bolt 34, as seen in FIG. 2.

A metal structure 56 is positioned within and conforms to the shape of gap 55. Metal is a solid material that is typically malleable, fusible, and ductile, with good electrical and thermal conductivity. Metal structure 56 is in contact with surface 57 of fastener 34, which includes surface 58 of head 36 and surface 60 of threaded shaft 38. Metal structure 56 extends across gap 55 from surfaces 58 and 60 and contacts at least a portion of the at least a portion 25 of plurality of fibers 24 associated with structural element 20 and recess section 54 of structural element 20. This configuration of metal structure 56 establishes an electrical connection with the fibers and fastener 34, thereby grounding fastener 34. Similarly, metal structure 56 contacts surface 57 of fastener 34, which includes surface 60 and extends across gap 55 and contacts at least a portion of the at least a portion 47 of plurality of fibers 30 associated with another structural element 26. Likewise, this configuration of metal structure 56 establishes an electrical connection with the fibers and fastener 34, thereby grounding fastener 34. Also, in this example, metal structure 56 contacts surface 57 of fastener 34, which includes surface 60 and extends across gap 55 and contacts surface 62 of structural component 32 at through-hole 42. This configuration of metal structure 56 also establishes and electrical connection between fastener 34 and structural component 32.

Metal structure 56, as described above, extends from the above-described surfaces of fastener 34 across gap 55 to the above described at least a portion of the at least a portion 25 and 47 of plurality of fibers 24 and 30, respectively, and to structural component 32. Metal structure 56 extends in a range between twenty-five micrometers (25 µm) and one millimeter (1 mm) in accomplishing these electrical connections. In extending across gap 55, metal structure 56 comes into contact and conforms to rough surfaces 48, 50 and 52. As will be described below, metal structure 56 is applied in a slurry or paste-like consistency to the above described surfaces of fastener 34 and to rough surfaces 48, 50 and 52 and surface 62. In application of metal structure to rough surfaces 48, 50 and 52 at least a portion of the at least a portion 25 and 47 of plurality of fibers 24 and 30, respectively, come into contact with metal structure 56. In securing structural element 20 and other structural element 26 to structural component 32 with fastener 34 the paste-like consistency of metal structure 56 is positioned within and occupies gap 55 and provides a continuous electrical connection between fastener 34 and the above described fibers of the composite material. Metal structure also provides an electrical connection between fastener 34 and structural component 32.

A method for assembling a structure, such as in this example, aircraft 10, includes providing structural element 20. In this example, other structural element 26 is additionally provided. Structural element 20 as is other structural element 26 are constructed of a composite material which includes , as described earlier, a matrix material 22 for structural element 20 and matrix material 28 for other structural element 26. A plurality of fibers 24 extend through matrix material 22 of structural element 20 and plurality of fibers 30 extend through matrix material 28. At least a portion 25 of the plurality of fibers 24, as described above, are accessible from rough surfaces 48 and 52 associated with structural element 20 and at least a portion 47 of plurality of fibers 30 , as described above, are accessible from rough surface 50 associated with structural element 26. With structural element 20, other structural element 26, structural component 32 and fastener 34 available to assemble, mixing a liquid metal alloy containing gallium with at least one of a solid metal and solid metal alloy can be conducted. In this example, a Wig-L-Bug dental amalgamator is employed. This mixture forms a slurry.

The slurry or paste-like mixture is applied to surface 57, including surfaces 58 and 60 of fastener 34 and onto at least a portion of the at least a portion 25 and 47 of the plurality of fibers 24 and 30, respectively, by applying the paste-like material to rough surfaces 48, 50 and 52. The paste-like material is also applied to surface 62 of structural component 32. With the paste-like material of metal structure 56 properly applied, securing structural element 20, along with in this embodiment, other structural element 26, to structural component 32 with fastener 34 can proceed, as described above. With securing fastener or bolt 34, gap 55 becomes occupied and filled with the paste-like consistency of metal structure 56 and conforms to the shape of gap 55. As will be described below, the paste-like material over a period of time sets and solidifies. Metal structure 56 provides the needed electrical connection between fastener 34 and the fibers and the structural component 32 and grounds fastener 34.

Metal structure 56, which contains a gallium alloy, is initially in a liquid state at approximately room temperature and is then mixed with a metal powder or film to form a slurry, wherein a peritectic bond formed in which gallium within the liquid metal alloy diffuses into a solid metal such as a pure metal or metal alloy. The initial mixture forms a slurry or paste-like mixture that transforms into an alloy with a higher melting temperature. Over time, the slurry or paste-like consistency cures into a solid.

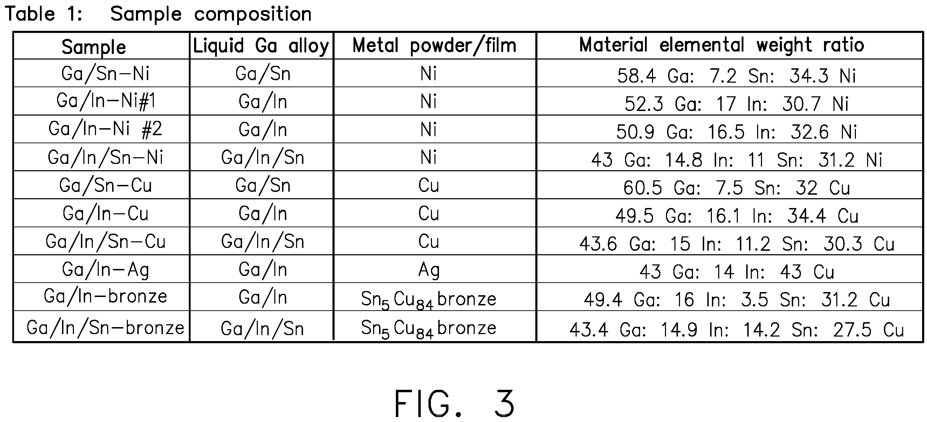

Referring to FIG, 3, Table 1 is shown which includes samples of compositions for metal structure 56. As can be seen in Table 1, gallium alloys are formed with combining gallium with one or both of tin and indium. These metal alloys are initially in a liquid state at about room temperature below thirty degrees Centigrade (30° C). The liquid metal alloy containing gallium is then mixed with a solid metal or solid metal alloy. The solid metal or solid metal alloy to be mixed with the liquid metal alloy is either in a powder or film state. The dimension of the particle size or the film thicknesses are between fifty nanometers (50 nm) and one hundred micro meters (100 µm). As can be seen in Table 1 of FIG. 3, the solid metal mixed with the gallium alloy are either pure nickel, pure copper or pure silver. A solid metal alloy, of bronze, can selectively be used to mix with the liquid gallium metal alloy. Table 1 shows the material elemental weight ratio of the chemical components to be mixed to create each sample of metal structure 56.

With the mixing of the gallium alloy with the solid metal or solid metal alloy, the resulting slurry or paste-like consistency provides the user the ability to properly apply the material to conform to the roughened surfaces of the fastener and the composite material. Once securement is completed using fastener 34, the material or metal structure 56 cures into a solid state. The assembled structure, or in this example, aircraft 10, can then be used for flight.

An additional mechanical reinforcing phase can be added to the slurry of the mixture of the liquid gallium metal alloy with a solid metal or solid metal alloy. This mechanical phase will provide enhanced shear resistance to the cured solidified alloy. This mechanical phase material can selectively include one of a pure cobalt, pure tungsten, pure molybdenum or pure titanium or of an alloy of titanium, such as AMS 4911, or stainless steel, such as 302 or 316.

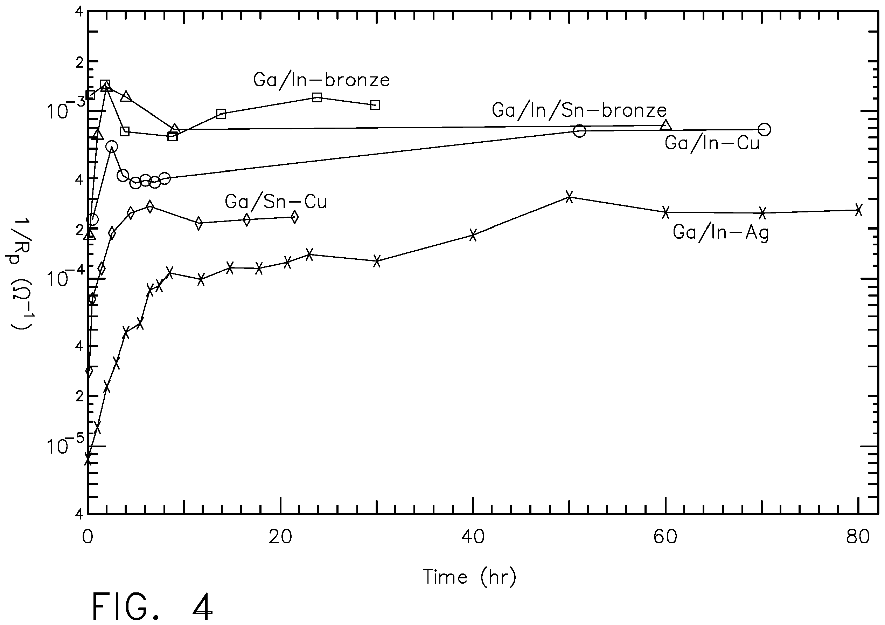

Referring now to FIG. 4, the graph shows free corrosion test results of five select samples of metal structure 56 which appear in Table 1 of FIG. 3. Corrosion resistance is important for metal structure 56, which will perform in the outside environment exposed to varying environmental conditions. The testing criteria assessment uses a commercial 3-electrode corrosion test cell. In addition to the tested samples, which comprised the working electrode, the cell contained a platinum mesh counter electrode and a silver wire reference electrode. The electrolyte (the corrosive environment) was three per cent by weight (3.0 wt%) Sodium Chloride (NaCl) solution exposed to laboratory air, i.e. containing dissolved oxygen. Using the fixturing in the cell, a surface area of one square centimeter (1cm x 1 cm) of each sample was exposed to the electrolyte. Standard linear polarization measurements were performed around the (open circuit) corrosion potential using -10 mV to +10mV potential sweeps. The data was fit to straight lines to obtain the polarization resistance (Rₚ, Ohms). Relative corrosion rates were expressed using the inverse of the polarization resistance. As can be seen in the graph, the testing in at least one instance extended to eighty hours.

Free corrosion rates are given by the inverse of the polarization resistance are shown in this graph in FIG. 4. The lower the inverse polarization resistance values on this graph indicates a greater resistance to corrosion. All of the copper containing metal alloys had equivalent corrosion rates regardless of the composition of the metal when the same liquid metal alloy (Ga/In or Ga/In/Sn) was used. The gallium liquid metal alloy had some effect. The gallium/tin liquid metal alloy was more corrosion resistant than gallium/indium liquid metals. The difference is attributable to tin being more oxidatively stable than indium. As can be noted, the silver containing solidified metals were more stable than any indium containing material.

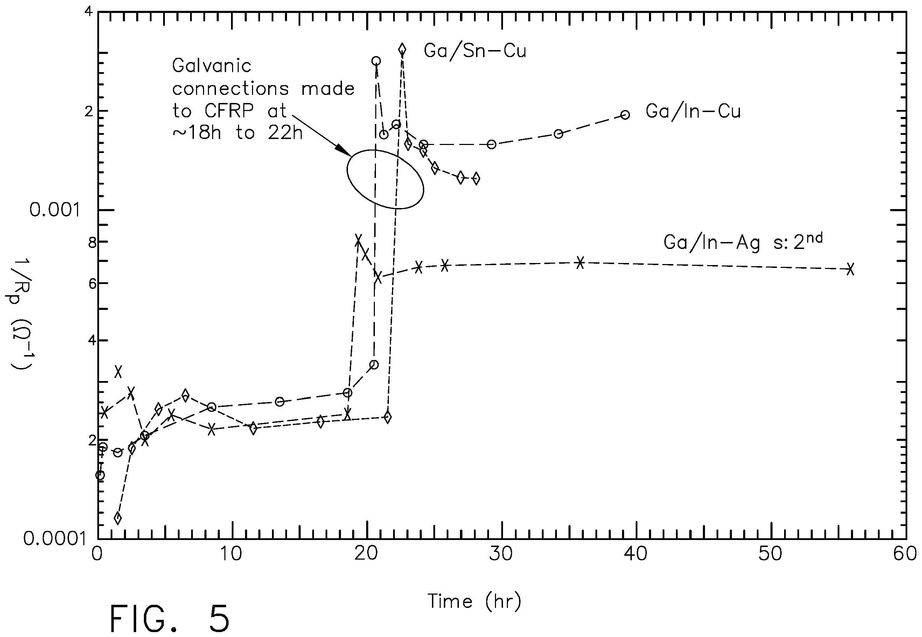

Referring to FIG. 5, this graph shows galvanic corrosion testing results for three selected samples of metal structure 56 from Table 1 of Fig. 3. Galvanic testing is conducted on samples of metal structure 56 since metal structure 56 is in constant electrical contact with conductive carbon fiber of the composite material.

The testing criteria includes placing each sample in contact with carbon fiber reinforced plastic ("CFRP") and using linear polarization measurements performed on combined test sample/CFRP electrodes. This approach treats the galvanic couple as a single electrode and enables a relative comparison of the free corrosion and galvanic corrosion rates. The CFRP was prepared by cutting a one square centimeter piece (1 cm²) from a CFRP panel. One face was ground to expose the carbon fiber. The edges and back were sealed with 5 minute epoxy cured overnight at fifty degrees Centigrade (50° C). The entire CRFP piece was immersed in the electrolyte adjacent to the test sample. Electrical connection between the test sample and the CFRP was made using a jumper from the test sample to an epoxy sealed threaded rod connected to the CFRP. The area for the test samples was 0.785 square centimeters (0.785 cm²) and the area of the CFRP was two centimeters by two centimeters (2 cm x 2 cm) which equals four square centimeters (4 cm²). Thus, the area ratio of CFRP/metal alloy was 5:1.

In referring to the graph in FIG. 5, the initial eighteen to twenty two hours portrayed on the graph are free corrosion test results for these three samples. The above galvanic test was then initiated, which indicated a steep rise in the corrosion rates for each sample in this graph. As time progressed, the corrosion rate of each of the three samples substantially leveled and reached a steady state. Again, the higher position on this graph indicates a greater corrosion rate. As can be seen, the gallium/tin with copper alloy and the gallium/indium with copper alloy have similar corrosion rates. The gallium/indium and silver alloy had the lowest corrosion rate.

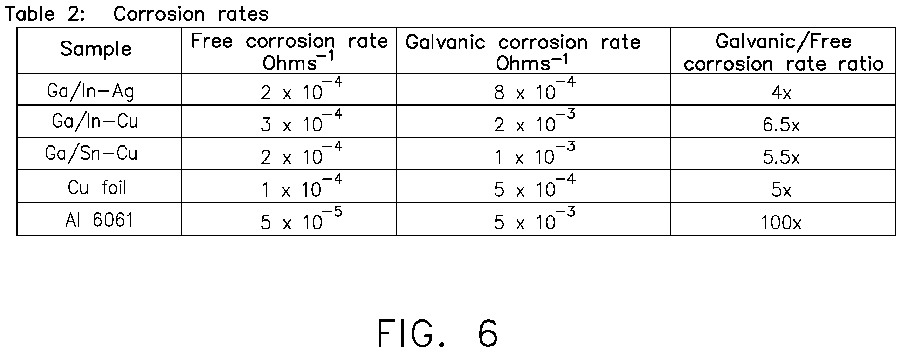

In referring to FIG. 6, Table 2 of corrosion rates of five samples are provided. The first three samples are sample compositions from Table 1 of FIG. 3 and are found in the corrosion tests in the graphs set forth in FIGS. 4 and 5. The next sample in Table 2 is copper foil and the final sample is aluminum alloy 6061. This table shows in the first column the free corrosion rate. In the second column is shown the galvanic corrosion rate. In the third column, is shown a ratio of the galvanic corrosion rate in ratio to free corrosion rate. The gallium liquid alloy mixed with copper solid metal samples have slightly greater galvanic corrosion rates than copper foil and gallium liquid alloy mixed with silver solid metal, but significantly less corrosion rate than aluminum alloy 6061.

## Claims

1. A structural assembly (14) of an aircraft (10), comprising:
a structural element (20, 26) constructed of a composite material comprising a matrix material (22, 28) and a plurality of fibers (24, 30) positioned to extend through the matrix material, wherein at least a portion of the plurality of fibers are accessible from a surface (48, 50, 52) of the structural element;
a fastener (34) secures the structural element to a structural component (32); and
a metal structure (56) positioned in contact with a surface (38) of the fastener, wherein the metal structure extends from the surface of the fastener and contacts at least a portion (25) of the at least a portion of the plurality of fibers, wherein the metal structure (56) comprises a gallium alloy,
wherein the metal structure (56) is obtainable by:
mixing a liquid metal alloy comprising gallium with at least one of a solid metal and solid metal alloy forming a slurry (56); and
applying the slurry onto a surface (38) of a fastener (34) and onto at least a portion (25) of the at least a portion of the plurality of fibers.

2. The structural assembly of claim 1,
wherein: the plurality of fibers
comprises carbon;
the matrix material comprises one of a thermoplastic resin and thermosetting resin; and
the fastener is constructed of a metal.

3. The structural assembly of any of claims 1-2, wherein the gallium alloy of the metal structure comprises at least one of indium and tin.

4. The structural assembly of any of claims 1-3, wherein the metal structure further comprises one of a solid metal and a solid metal alloy.

5. The structural assembly of claim 4, wherein:
the one of the solid metal and the solid metal alloy comprises one of a powder and a film; and
a particle size of the powder or a thickness of the film has a dimension in a range between 50 nm and 100 µm.

6. The structural assembly of claim 5, wherein the solid metal comprises one of pure copper, pure silver, and pure nickel.

7. The structural assembly of any of claims 5-6, wherein the solid metal alloy comprises bronze.

8. The structural assembly of any of claims 1-4, wherein the metal structure further comprises a mechanical reinforcing phase comprising one of pure cobalt, pure tungsten, pure molybdenum, and pure titanium or an alloy comprising one of a titanium alloy and a stainless steel.

9. The structural assembly of any of claims 1-4 or 8, wherein:
the metal structure extends in a range between 25 µm and 1 mm between the surface of the fastener to at least a portion of the portion of the plurality of fibers; and
the metal structure is in contact with the surface of the structural element.

10. A method for assembling a structure (10), comprising the steps of:
providing a structural element (20, 26) constructed of a composite material comprising a matrix material (22, 28) and a plurality of fibers (24, 30) positioned to extend through the matrix material, wherein at least a portion of the plurality of fibers are accessible from a surface (48, 50, 52) of the structural element;
mixing a liquid metal alloy comprising gallium with at least one of a solid metal and solid metal alloy forming a slurry (56);
applying the slurry onto a surface (38) of a fastener (34) and onto at least a portion (25) of the at least a portion of the plurality of fibers; and
securing the structural element with the fastener to a structural component (32) wherein the slurry is positioned in contact with the surface of the fastener and interconnects the surface of the fastener with the at least a portion of the at least a portion of the plurality of fibers, wherein the structural element and the structural component are parts of an aircraft.

11. The method for assembling a structure of claim 10, wherein:
the plurality of fibers comprises carbon;
the matrix material comprises one of a thermoplastic resin and thermosetting resin;
the fastener is constructed of a metal; and
the step of securing includes placing the slurry in contact with the surface of the structural element.

12. The method for assembling a structure of any of claims 10-11, wherein:
the liquid metal is an alloy comprising at least one of indium and tin; and
the step of mixing includes mixing the liquid metal alloy with at least one of a solid metal and a solid metal alloy.

13. The method for assembling a structure of claim 12, wherein the one of the solid metal and the solid metal alloy comprises one of a powder and a film.

14. The method for assembling an aircraft of any of claims 10-12 further including the step of allowing the slurry to solidify prior to placing the aircraft into flight.

## Patentansprüche

1. Tragende Baugruppe (14) eines Flugzeugs (10), umfassend:
ein Tragelement (20, 26), das aus einem Verbundmaterial hergestellt ist, das ein Matrixmaterial (22, 28) und eine Vielzahl von Fasern (24, 30) umfasst, die positioniert sind, um sich durch das Matrixmaterial zu erstrecken, wobei mindestens ein Teil der Vielzahl von Fasern von einer Oberfläche (48, 50, 52) des Tragelements zugänglich ist;
ein Befestigungselement (34), das das Tragelement an einer tragenden Komponente (32) befestigt; und
eine Metallstruktur (56), die in Kontakt mit einer Oberfläche (38) des Befestigungselements positioniert ist, wobei sich die Metallstruktur von der Oberfläche des Befestigungselements aus erstreckt und mindestens einen Teil (25) des mindestens einen Teils der Vielzahl von Fasern berührt,
wobei die Metallstruktur (56) eine Galliumlegierung umfasst,
wobei die Metallstruktur (56) erhältlich ist durch:
Mischen einer Gallium enthaltenden Flüssigmetalllegierung mit einem aus einem festen Metall oder einer festen Metalllegierung, das/die einen Schlicker (56) bildet; und
Aufbringen des Schlickers auf eine Oberfläche (38) eines Befestigungselements (34) und auf mindestens einen Teil (25) des mindestens einen Teils der Vielzahl von Fasern.

2. Tragende Baugruppe nach Anspruch 1, bei der:
die Vielzahl von Fasern Kohlenstoff umfasst;
das Matrixmaterial ein thermoplastisches Harz oder ein duroplastisches Harz umfasst; und
das Befestigungselement aus einem Metall besteht.

3. Tragende Baugruppe nach einem der Ansprüche 1-2, bei der die Galliumlegierung der Metallstruktur Indium und/oder Zinn umfasst.

4. Tragende Baugruppe nach einem der Ansprüche 1-3, bei der die Metallstruktur ferner ein festes Metall oder eine feste Metalllegierung umfasst.

5. Tragende Baugruppe nach Anspruch 4, bei der:
das feste Metall oder die feste Metalllegierung eines aus einem Pulver und einer Folie umfasst; und
eine Partikelgröße des Pulvers oder eine Dicke der Folie eine Abmessung in einem Bereich zwischen 50 nm und 100 µm aufweist.

6. Tragende Baugruppe nach Anspruch 5, bei der das feste Metall eines von reinem Kupfer, reinem Silber und reinem Nickel umfasst.

7. Tragende Baugruppe nach einem der Ansprüche 5-6, bei der die feste Metalllegierung Bronze umfasst.

8. Tragende Baugruppe nach einem der Ansprüche 1-4, bei der die Metallstruktur ferner eine mechanische Verstärkungsphase umfasst, die eines von reinem Kobalt, reinem Wolfram, reinem Molybdän und reinem Titan oder eine Legierung umfasst, die eines von einer Titanlegierung und einem rostfreien Stahl umfasst.

9. Tragende Baugruppe nach einem der Ansprüche 1-4 oder 8, bei der:
sich die Metallstruktur in einem Bereich zwischen 25 µm und 1 mm zwischen der Oberfläche des Befestigungselements und zu mindestens einem Teil des Teils der Vielzahl von Fasern erstreckt; und
die Metallstruktur in Kontakt mit der Oberfläche des Bauteils steht.

10. Verfahren zum Zusammenbau einer Struktur (10), mit den Schritten:
Bereitstellen eines Tragelements (20, 26), das aus einem Verbundmaterial konstruiert ist, das ein Matrixmaterial (22, 28) und eine Vielzahl von Fasern (24, 30) umfasst, die positioniert sind, um sich durch das Matrixmaterial zu erstrecken, wobei mindestens ein Teil der Vielzahl von Fasern von einer Oberfläche (48, 50, 52) des Tragelements zugänglich ist;
Mischen einer Gallium enthaltenden Flüssigmetalllegierung mit einem festen Metall und/oder einer festen Metalllegierung, das/die einen Schlicker (56) bildet;
Auftragen des Schlickers auf eine Oberfläche (38) eines Befestigungselements (34) und auf mindestens einen Teil (25) des mindestens einen Teils der Vielzahl von Fasern; und
Sichern des Tragelements mit dem Befestigungselement an einer tragenden Komponente (32), wobei der Schlicker in Kontakt mit der Oberfläche des Befestigungselements positioniert ist und die Oberfläche des Befestigungselements mit dem mindestens einen Teil des mindestens einen Teils der Vielzahl von Fasern verbindet, wobei das Trageelement und die tragende Komponente Teile eines Flugzeugs sind.

11. Verfahren zum Zusammenbau einer Struktur nach Anspruch 10, bei dem:
die Vielzahl von Fasern Kohlenstoff umfasst;
das Matrixmaterial ein thermoplastisches Harz oder ein duroplastisches Harz umfasst;
das Befestigungselement aus einem Metall hergestellt ist; und
der Schritt des Sichern das Anbringen des Schlickers in Kontakt mit der Oberfläche des Tragelements beinhaltet.

12. Verfahren zum Zusammenbau einer Struktur nach einem der Ansprüche 10-11, bei dem:
das flüssige Metall eine Legierung ist, die Indium und/oder Zinn umfasst; und
der Schritt des Mischens das Mischen der Flüssigmetalllegierung mit einem festen Metall und/oder einer festen Metalllegierung umfasst.

13. Verfahren zum Zusammenbau einer Struktur nach Anspruch 12, bei dem das feste Metall oder die feste Metalllegierung eines aus einem Pulver und einem Film umfasst.

14. Verfahren zum Zusammenbauen eines Flugzeugs nach einem der Ansprüche 10-12, ferner umfassend den Schritt des Erstarrenlassens des Schlickers, bevor das Flugzeug geflogen wird.

## Revendications

1. Ensemble structurel (14) d'un aéronef (10), comprenant :
un élément structurel (20, 26) constitué d'un matériau composite comprenant un matériau de matrice (22, 28) et une pluralité de fibres (24, 30) positionnées pour s'étendre à travers le matériau de matrice, dans lequel au moins une partie de la pluralité de fibres sont accessibles depuis une surface (48, 50, 52) de l'élément structurel ;
une fixation (34) fixe l'élément structurel à un composant structurel (32) ; et
une structure métallique (56) positionnée en contact avec une surface (38) de la fixation, dans lequel la structure métallique s'étend depuis la surface de la fixation et vient en contact avec au moins une partie (25) de la au moins une partie de la pluralité de fibres, dans lequel la structure métallique (56) comprend un alliage de gallium,
dans lequel la structure métallique (56) peut être obtenue par :
mélange d'un alliage de métal liquide comprenant du gallium avec au moins l'un d'un métal solide et d'un alliage de métal solide en formant une suspension (56) ; et
appliquer la suspension sur une surface (38) d'une fixation (34) et sur au moins une partie (25) de la au moins une partie de la pluralité de fibres.

2. Ensemble structurel selon la revendication 1,
dans lequel : la pluralité de fibres comprend du carbone ;
le matériau de matrice comprend l'une d'une résine thermoplastique et d'une résine thermodurcissable ; et
la fixation est construite en métal.

3. Ensemble structurel selon l'une des quelconques revendications 1 et 2, dans lequel l'alliage de gallium de la structure métallique comprend au moins un parmi l'indium et l'étain.

4. Ensemble structurel selon l'une des quelconques revendications 1 à 3, dans lequel la structure métallique comprend en outre un certain parmi un métal solide et un alliage de métal solide.

5. Ensemble structurel selon la revendication 4, dans lequel :
le certain du métal solide et de l'alliage de métal solide comprend l'un d'une poudre et d'un film ; et
une taille de particule de la poudre ou une épaisseur du film a une dimension comprise entre 50 nm et 100 µm.

6. Ensemble structurel selon la revendication 5, dans lequel le métal solide comprend un parmi du cuivre pur, de l'argent pur et du nickel pur.

7. Ensemble structurel selon l'une des quelconques revendications 5 à 6, dans lequel l'alliage de métal solide comprend du bronze.

8. Ensemble structurel selon l'une des quelconques revendications 1 à 4, dans lequel la structure métallique comprend en outre une phase de renforcement mécanique comprenant un parmi du cobalt pur, du tungstène pur, du molybdène pur et du titane pur ou un alliage comprenant l'un d'un alliage de titane et d'un acier inoxydable.

9. Ensemble structurel selon l'une des quelconques revendications 1 à 4 ou 8, dans lequel :
la structure métallique s'étend dans une plage comprise entre 25 µm et 1 mm entre la surface de la fixation et au moins une partie de la partie de la pluralité de fibres ; et
la structure métallique est en contact avec la surface de l'élément structurel.

10. Procédé d'assemblage d'une structure (10), comprenant les étapes consistant à :
fournir un élément structurel (20, 26) constitué d'un matériau composite comprenant un matériau de matrice (22, 28) et une pluralité de fibres (24, 30) positionnées pour s'étendre à travers le matériau de matrice, dans lequel au moins une partie de la pluralité de fibres sont accessibles depuis une surface (48, 50, 52) de l'élément structurel ;
mélanger un alliage de métal liquide comprenant du gallium avec au moins l'un d'un métal solide et d'un alliage de métal solide en formant une suspension (56) ;
appliquer la suspension sur une surface (38) d'une fixation (34) et sur au moins une partie (25) de la au moins une partie de la pluralité de fibres ; et
fixer l'élément structurel à l'aide de la fixation à un composant structurel (32), dans lequel la suspension est positionnée en contact avec la surface de la fixation et interconnecte la surface de la fixation à la au moins une partie de la pluralité de fibres, dans lequel l'élément structurel et le composant structurel sont des pièces d'un aéronef.

11. Procédé d'assemblage d'une structure selon la revendication 10, dans lequel :
la pluralité de fibres comprend du carbone ;
le matériau de matrice comprend l'un d'une résine thermoplastique et d'une résine thermodurcissable ;
la fixation est construite en métal ; et
l'étape de fixation comprend la mise en contact de la suspension avec la surface de l'élément structurel.

12. Procédé d'assemblage d'une structure selon l'une quelconque des revendications 10 à 11, dans lequel :
le métal liquide est un alliage comprenant au moins l'un parmi l'indium et l'étain ; et
l'étape de mélange comprend le mélange de l'alliage de métal liquide avec au moins l'un d'un métal solide et d'un alliage de métal solide.

13. Procédé d'assemblage d'une structure selon la revendication 12, dans lequel l'un parmi le métal solide et l'alliage métallique solide comprend l'un parmi une poudre et un film.

14. Procédé d'assemblage d'un aéronef selon l'une des quelconques revendications 10 à 12, incluant en outre l'étape consistant à laisser la suspension se solidifier avant de mettre l'aéronef en vol.
